# EUROPÄISCHE PATENTANMELDUNG

(11) **EP 4 425 020 A1**
(43) Veröffentlichungstag der Anmeldung: **04.09.2024**
(21) Anmeldenummer: 23159261.9
(22) Anmeldetag: 28.02.2023
(51) Int. Cl.: F16K 15/03, F16K 15/14

(54) **RÜCKFLUSSVERHINDERER ZUR INSTALLATION IN EINEM STRÖMUNGSABGANG EINES SYSTEMS FÜR FLIESSFÄHIGE MEDIEN**

(71) Anmelder: Hinni AG, 4105 Biel-Benken (CH)
(72) Erfinder: Jermann, Dieter, 4242 Laufen (CH)
(74) Vertreter: Ullrich, Gerhard

(57) **Zusammenfassung**

Die Erfindung betrifft einen Rückflussverhinderer (**1**) zur Installation in einem Strömungsabgang (**2**) eines Systems im Anlagen- und Rohrleitungsbau für Gase, Flüssigkeiten, mit Gasstrom geförderte staub- oder feinkörnige Schüttgüter und Dickstoffe sowie in Gestalt eines Hydranten (**9**). Der sich selbsttätig verstellende Verschlusskörper (**10**) des Rückflussverhinderers (**1**) nimmt nur bei anstehendem Strömungsdruck vonseiten des Systems, welcher grösser als ein definierter Wert ist, seine Offenstellung zur Gewährung des Strömungsdurchflusses ein. Der Rückflussverhinderer (**1**) umfasst den Verschlusskörper (**10**) mit zumindest einer eigenelastischen Biegezone (**101**), ein Lagerelement (**13**) zum Halten des Verschlusskörpers (**10**) und ein den Durchfluss des Mediums erlaubendes Widerlager (**11**) aufseiten des Systems, auf dem sich der Verschlusskörper (**10**) in der Schliessstellung abstützt.

## Beschreibung

### Anwendungsgebiet der Erfindung

Die Erfindung betrifft einen Rückflussverhinderer zur Installation in einem Strömungsabgang eines Systems für fliessfähige Medien mit einem verstellbaren Verschlusskörper, der zur Öffnung bei anstehendem Strömungsdruck vonseiten des Systems und abgedichtetem Verschluss bei anstehendem Umkehrfluss hin zum System bestimmt ist. Fliessfähige Medien umfassen in der Anwendung des Rückflussverhinderers im Anlagen- und Rohrleitungsbau Gase, Flüssigkeiten, mit Gasstrom geförderte staub- oder feinkörnige Schüttgüter und Dickstoffe sowie Wasser für den Einbau in Hydranten, in der Konfiguration als Überflur- und Unterflurhydranten.

### Stand der Technik

Um das Risiko auszuschliessen, dass infolge unachtsamer Fehlmanipulationen oder von Personen in übler Absicht in Anlagen, Rohrleitungsnetze oder Hydranten Fremdstoffe, z.B. Schmutzwasser, eingebracht werden könnten, baut man in solche Systeme Rückflussverhinderer ein.

Aus der WO 2004/053 368 A1 und der US 2007/157 972 A1 sind Rückflussverhinderer bekannt, bei denen durch eine vorgespannte Schraubenfeder der Verschlusskörper auf den Ventilsitz gehalten wird. Erst bei regulärem Strömungsdruck wird die Schraubenfeder auf Zug belastet und so öffnet sich der Strömungsdurchgang.

Die DE 2011 8 810 U1, EP 3 012 499 A1 und JP 2006-320 386 A haben Rückflussverhinderer zum Gegenstand, bei denen regulärer Strömungsdruck die Schraubenfeder auf Druck belastet und so den Strömungsdurchgang öffnet.

Die US 5 392 810 A, und die DE 2 718 821 B1 und EP 3 633 111 A1 betreffen zweiteilige Verschlusskörper in Gestalt von Drehflügeln, die von Schraubenfedern in Schliessstellung gehalten werden. Erst anstehender regulärer Strömungsdruck drückt die Drehflügel in die Offenstellung und ermöglicht dadurch den Strömungsdurchgang.

### Aufgabe der Erfindung

Die insoweit bekannten Rückflussverhinderer sind im konstruktiven Aufbau und daher auch in der Montage relativ aufwändig sowie teils störungsanfällig bei Frost und ausserdem ohne besondere Anpassungen nicht für die grosse Breite des Einsatzgebiets universell anwendbar.

Der Erfindung liegt die Aufgabe zugrunde, für das Anwendungsgebiet im Anlagen- und Rohrleitungsbau für Gase, Flüssigkeiten, mit Gasstrom geförderte staub- oder feinkörnige Schüttgüter und Dickstoffe sowie für den Einbau in Hydranten, einen gegenüber den oben genannten Nachteilen, in mehrfacher Hinsicht verbesserten Rückflussverhinderer zu schaffen.

### Übersicht über die Erfindung

Der zur Installation in einen Strömungsabgang eines Systems für fliessfähige Medien konzipierte Rückflussverhinderer weist einen verstellbaren Verschlusskörper auf, der zur Öffnung bei anstehendem Strömungsdruck vonseiten des Systems als regulärer Strömungsdruck und abgedichtetem Verschluss bei anstehendem Strömungsdruck hin zum System als Strömungsdruck im Umkehrfluss bestimmt ist. Der Verschlusskörper hat zumindest eine eigenelastische Biegezone, welche:
- bei anstehendem regulärem Strömungsdruck, kleiner als ein definierter Betrag das Verharren des Verschlusskörpers in seiner Schliessstellung bewirkt;
- bei anstehendem regulärem Strömungsdruck, ab grösser des definierten Betrags die Verstellung des Verschlusskörpers aus der Schliessstellung heraus in Richtung Offenstellung bewirkt;
- bei Reduktion des anstehenden regulären Strömungsdruck, kleiner als der definierte Betrag die Einstellung des Verschlusskörpers zurück in die Schliessstellung aufgrund materialbedingter Rückverformung bewirkt; und
- bei anstehendem Strömungsdruck im Umkehrfluss sich die Schliessstellung des Verschlusskörpers intensiviert.

Im Strömungsabgang ist ein Lagerelement zum Halten des Verschlusskörpers vorgesehen. Aufseiten des Systems ist ein den Durchfluss des Mediums erlaubendes Widerlager angeordnet, auf dem sich der Verschlusskörper in der Schliessstellung abstützt.

Nachstehend sind besonders vorteilhafte Details zum erfindungsgemässen Rückflussverhinderer genannt: Die zumindest eine Biegezone erstreckt sich über den Durchmesser des Verschlusskörpers und gliedert den Verschlusskörper so in zwei Zonen, vorzugsweise halbkreisförmige Zonen.

Das Lagerelement ist als Stangenteil beschaffen, vorzugsweise als achsartiger Stab, welches sich auf der Abflussseite entlang der zumindest einen Biegezone erstreckt und in einer Verankerung positionsgesichert ist.

Die Verankerung ist gänzlich im Widerlager angeordnet oder einerseits im Widerlager und andererseits in einem Sitz in einem Zwischenstück - z.B. einer Muffe - des Strömungsabgangs oder in einem Schlauchanschluss eines Hydranten vorgesehen.

Der Verschlusskörper besitzt auf der Zuflussseite eine Positionierkontur, die sich vorzugsweise über den Durchmesser des Verschlusskörpers parallel zu der zumindest einen Biegezone erstreckt und zur formschlüssigen Einbettung in der Aufnahmekontur am Widerlager bestimmt ist. Auf der Abflussseite hat der Verschlusskörper Versteifungskonturen, die sich bis an die zumindest eine Biegezone heran erstrecken.

Alternativ kann der Verschlusskörper in eine Vielzahl von Zonen aufweisen, zwischen denen Biegezonen verlaufen. Dann wird das Lagerelement als Gestänge beschaffen sein, welches sich ebenfalls auf der Abflussseite erstreckt und in einer Verankerung positionsgesichert ist.

Wiederum ist die Verankerung gänzlich im Widerlager angeordnet oder einerseits im Widerlager und andererseits in einem Sitz in einem Zwischenstück - z.B. einer Muffe - des Strömungsabgangs oder in einem Schlauchanschluss eines Hydranten vorgesehen.

Der Verschlusskörper besitzt auf der Zuflussseite zumindest eine Positionierkontur, die zur formschlüssigen Einbettung in zumindest einer Aufnahmekontur am Widerlager bestimmt ist. Auf der Abflussseite hat der Verschlusskörper Versteifungskonturen, die sich bis an die Biegezonen heran erstrecken.

Der Verschlusskörper ist aus Kunststoff beschaffen und hat eine dem System zugewandte Zuflussseite sowie eine dazu abgewandte Abflussseite. In seiner Ruhestellung, wie in seiner Schliessstellung, zeigt sich der Verschlusskörper als scheibenförmig ausgebildet.

Das Widerlager ist einteilig ausgebildet und hat eine Dichtfläche, die im Zusammenwirken mit dem Verschlusskörper bei anstehendem Strömungsdruck aufgrund Umkehrfluss, die intensivierte Abdichtung bewirkt. Zwischen der Dichtfläche erstreckt sich eine gitterartige Verstrebung, welche bei anstehendem regulärem Strömungsdruck, den Durchfluss durch den Rückflussverhinderer erlaubt, aber bei anstehendem Strömungsdruck aufgrund Umkehrfluss den Verschlusskörper flächig stützt.

Der Rückflussverhinderer ist zur Verwendung in Systemen - nämlich Anlagen, Rohrleitungsnetzen und Hydranten - bestimmt und für Medien, wie Gase, Flüssigkeiten, mit Gasstrom geförderte staub- oder feinkörnige Schüttgüter und Dickstoffe geeignet.

### Kurzbeschreibung der beigefügten Zeichnungen

Es zeigen:

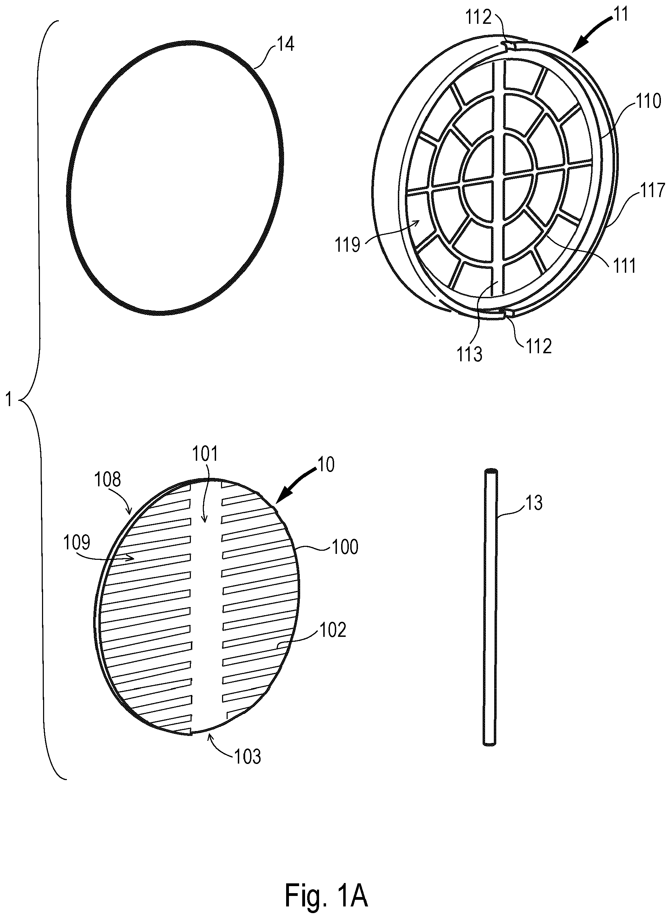

- Figur 1A: - die Bestandteile des erfindungsgemässen Rückflussverhinderers, in Perspektivansicht;

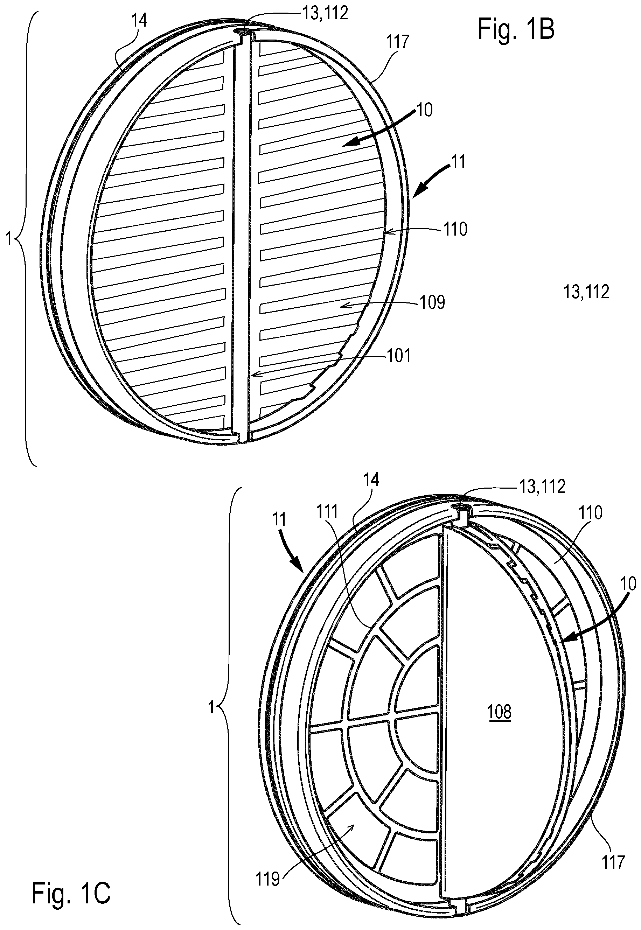

- Figur 1B: - den Rückflussverhinderer gemäss 1A, zusammengefügt, in Schliessstellung, in Perspektivansicht;
- Figur 1C: - den Zusammenbau gemäss 1B, in Offenstellung, in Perspektivansicht;
- Figur 2A: - einen Strömungsabgang an einer Rohrleitung mit dem Rückflussverhinderer gemäss Figur 1B und zwischen Rohrstücken angeordneter Muffe, in perspektivischer Explosivansicht;
- Figur 2B: - den Aufbau gemäss Figur 2A, in gewechselter perspektivischer Explosivansicht;
- Figur 2C: - den Zusammenbau gemäss Figuren 2A und 2B mit dem Rückflussverhinderer in der Muffe eingesetzt, in Offenstellung, bei anstehendem regulärem Strömungsdruck, Sicherungselement nicht sichtbar, in Perspektivansicht;
- Figur 2D: - den Zusammenbau gemäss Figur 2C, mit dem Rückflussverhinderer in Schliessstellung, bei anstehendem Strömungsdruck im Umkehrfluss, in Perspektivansicht;

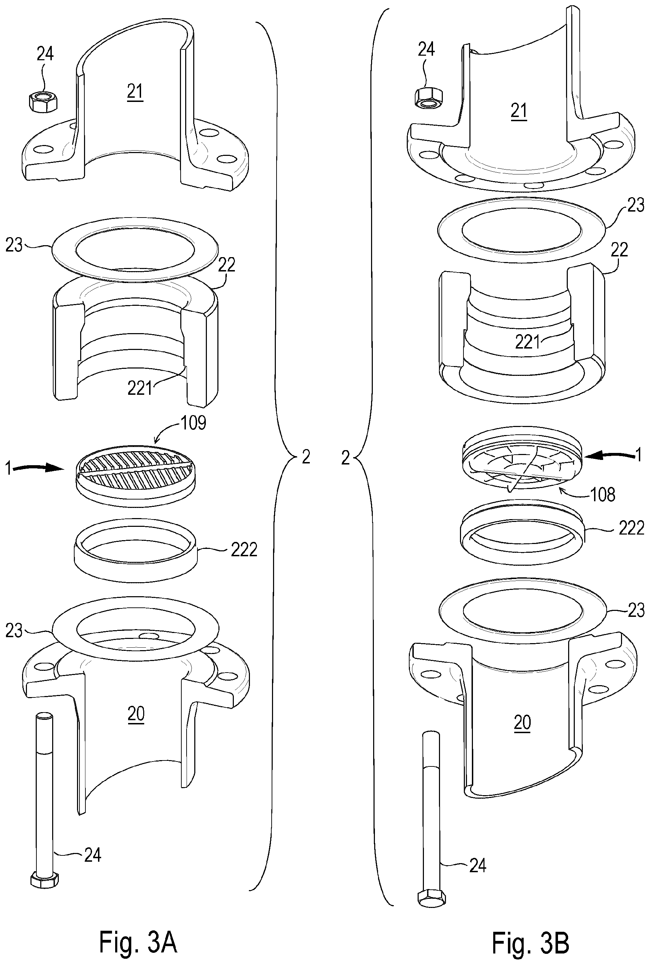

- Figur 3A: - einen Strömungsabgang an einer Rohrleitung mit einer Flanschverbindung, mit dem Rückflussverhinderer gemäss Figur 1B, in perspektivischer Explosivansicht;
- Figur 3B: - den Aufbau gemäss Figur 3A, in gewechselter perspektivischer Explosivansicht;

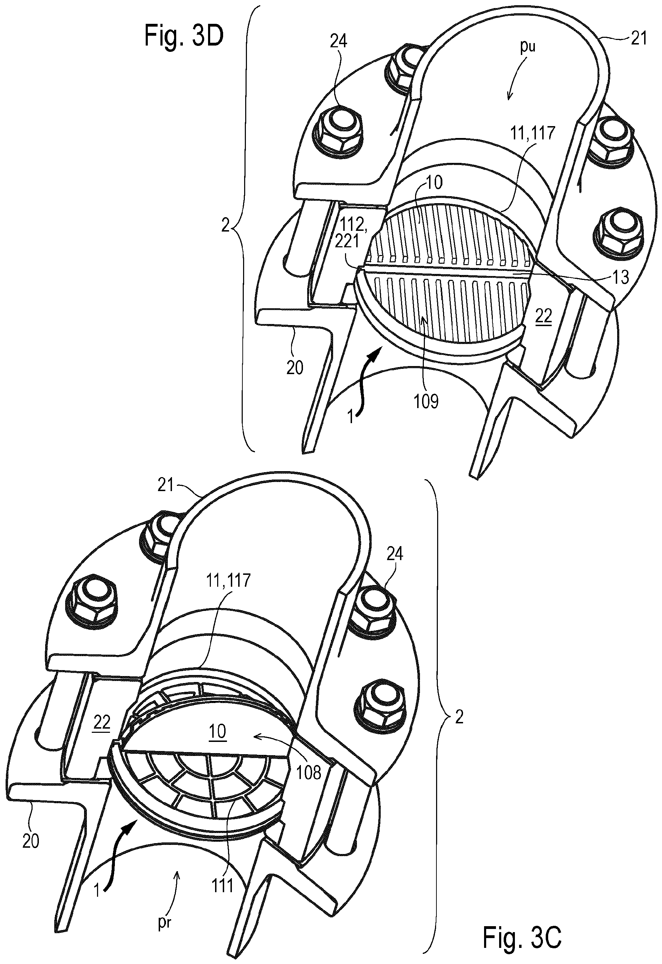

- Figur 3C: - den Zusammenbau gemäss Figuren 3A und 3B, mit dem Rückflussverhinderer in Offenstellung, bei anstehendem regulärem Strömungsdruck, in Perspektivansicht;
- Figur 3D: - den Zusammenbau gemäss Figur 3C, mit dem Rückflussverhinderer in Schliessstellung, bei anstehendem Strömungsdruck im Umkehrfluss, in Perspektivansicht;
- Figur 4A: - das Oberteil eines Überflurhydranten mit einem Stutzen, mit anmontiertem Schlauchanschluss und Verschlusskappe, in Perspektivansicht;
- Figur 4B: - den Aufbau gemäss Figur 4A, mit gelöstem Schlauchanschluss und Verschlusskappe, in perspektivischer Explosivansicht;
- Figur 4C: - ein Oberteil eines Überflurhydranten mit zwei Stutzen, linker Stutzen mit montiertem Schlauchanschluss (darin eingesetzter Rückflussverhinderer nicht sichtbar) und aufgesetzter Verschlusskappe; rechter Stutzen mit gelöstem Schlauchanschluss und Verschlusskappe, in teilweiser perspektivischer Explosivansicht;
- Figur 4D: - einen Schlauchanschluss als Strömungsabgang an einem Hydranten mit dem Rückflussverhinderer gemäss Figur 1B und Sicherungselement, in perspektivischer Explosivansicht;
- Figur 4E: - den Zusammenbau gemäss Figuren 4D mit dem Rückflussverhinderer im Schlauchanschluss eingesetzt, in Schliessstellung, bei anstehendem Strömungsdruck im Umkehrfluss, Sicherungselement nicht sichtbar, in Perspektivansicht;
- Figur 4F: - das vergrösserte Detail X aus Figur 4C, mit im Schlauchanschluss des rechten Stutzens eingesetztem Rückflussverhinderer, in Schliessstellung, bei anstehendem Strömungsdruck im Umkehrfluss, im perspektivischen Teilschnitt;
- Figur 4G: - den Zusammenbau gemäss Figur 4D, mit dem Rückflussverhinderer in Offenstellung, bei anstehendem regulärem Strömungsdruck, in Perspektivansicht; und
- Figur 4H: - den Aufbau gemäss Figuren 4F, mit dem Rückflussverhinderer in Offenstellung, bei anstehendem regulärem Strömungsdruck, im perspektivischen Teilschnitt.

### Ausführungsbeispiel

Mit Bezug auf die beiliegenden Zeichnungen erfolgt nachstehend die detaillierte Beschreibung eines Ausführungsbeispiels des geschaffenen erfindungsgemässen Rückflussverhinderers in der Einbausituation für einen Strömungsabgang aus einer Rohrleitung mit einer Muffen- oder Flanschverbindung oder aus einem Schlauchanschluss an einem Überflurhydranten.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1A

Die wichtigsten Einzelteile des Rückflussverhinderers **1** sind der Verschlusskörper **10,** das Widerlager **11** und das Lagerelement **13.** Zum Aufsetzen auf das Widerlager **11** ist ein Dichtring **14** vorgesehen. Der Verschlusskörper **10** hat die prinzipielle Form einer Scheibe **100,** besteht vorzugsweise aus Kunststoff und besitzt eine Zuflussseite **108** sowie eine dazu gegenüberliegende Abflussseite **109.** In Funktion ist die Zuflussseite **108** dem System - in Gestalt einer Anlage, eines Rohrleitungsnetzes oder eines Hydranten **9** - zugewandt. Hingegen weist die Abflussseite **109** stromabwärts vom Strömungsabgang **2** hinaus. Auf der Abflussseite **109** befinden sich eine bahnförmige, sich über den Durchmesser des Verschlusskörpers **10** erstreckende eigenelastische Biegezone **101** mit materialbedingter Rückverformungseigenschaft sowie Versteifungskonturen **102,** die bis an die Biegezone **101** heran verlaufen. Die Biegezone **101** gliedert die Abflussseite **109** in zwei halbkreisförmige Zonen. Auf der Zuflussseite **108** ist eine Positionierkontur **103** vorhanden, die sich vorzugsweise über den Durchmesser des Verschlusskörpers **10** und parallel zur Biegezone **101** erstreckt.

Das Widerlager **11** ist vorteilhaft ein metallisches Gussteil von im Wesentlichen tellerförmiger Gestalt. Auf der Abflussseite **119** liegen die als Kreisring ausgebildete Dichtfläche **110,** der die Dichtfläche **110** umrandende und sich davon erhebende Kragen **117** sowie die sich über den Durchmesser des Widerlagers **11** erstreckende nutartige Aufnahmekontur **113.** Zwischen der Dichtfläche **110** spannt sich eine gitterartige Verstrebung **111** auf. Im Kragen **117** sind zwei sich diametral gegenüberliegende Verankerungen **112** vorhanden, designed als zur Abflussseite **119** hin offene Einkerbungen.

Das zum Halten des Verschlusskörpers **10** bestimmte Lagerelement **13** ist als Stangenteil beschaffen ist, vorzugsweise als achsartiger Stab.

### Figur 1B

Diese Figur illustriert den Rückflussverhinderer **1** zusammengefügt. Der Verschlusskörper **10** - hier in Schliessstellung bzw. in Ruhestellung - ist mit seiner Zuflussseite **108** innerhalb des Kragens **117** auf die Abflussseite **119** des Widerlagers **11** aufgelegt und überdeckt dabei die Dichtfläche **110.** Die Positionierkontur **103** auf der Zuflussseite **108** des Verschlusskörpers **10** kommt dabei formschlüssig in der Aufnahmekontur **113** am Widerlager **11** zu liegen. Das Lagerelement **13** liegt auf der Biegezone **101** auf und steckt in den Verankerungen **112.** Somit wird der Verschlusskörper **10** zwischen dem Widerlager **11** und dem Lagerelement **13** gehalten, wobei die quasi beiden durch die Biegezone **101** miteinander verbundenen Flügel des Verschlusskörpers **10** gegenwärtig in einer Ebene aufgespannt sind. Der Dichtring **14** ist radial auf das Widerlager **11** aufgezogen. Anstehender regulärer Strömungsdruck - kleiner als ein definierter Betrag - bewirkt das Verharren des Verschlusskörpers **10** in seiner Schliessstellung. Bei anstehendem Strömungsdruck im Umkehrfluss würde sich die Schliessstellung des Verschlusskörpers **10** intensivieren, nämlich der Verschlusskörper **10** stark auf die Dichtfläche **110** aufgedrückt werden und so der Rückflussverhinderer **1** in Funktion kommen.

### Figur 1C

Verursacht von einem regulären Strömungsdruck **pᵣ** vonseiten des Systems auf den Verschlusskörper **10** - ab grösser eines definierten Betrags - werden je nach Intensität des Strömungsdrucks **pᵣ,** aus der Schliessstellung heraus, seine Flügel bis maximal in die Offenstellung mit Verformung in der Biegezone **101** aufgedrückt. Das anstehende Medium kann durch die Öffnungen zwischen der Verstrebung **111,** seitlich vorbei am zusammengefalteten Verschlusskörper **10,** strömen. Das Lagerelement **13** hält den zusammengefalteten Verschlusskörper **10** gegen den Strömungsdruck **pᵣ** fest. Bei Reduktion des anstehenden regulären Strömungsdrucks **pᵣ** - kleiner als der definierte Betrag - würde die Einstellung des Verschlusskörpers **10** zurück in die Ruhe- bzw. Schliessstellung aufgrund materialbedingter Rückverformung bewirken.

### Figuren 2A und 2B

Dieses Figurenpaar zeigt einen Strömungsabgang **2** an einer Rohrleitung mit dem Rückflussverhinderer **1** und zwischen Rohrstücken **20,21** angeordneter Muffe **22.** Ein erstes Rohrstück **20** erstreckt sich von der Zuflussseite, während das zweite Rohrstück **20** zur Abflussseite hin verläuft. Der Rückflussverhinderer **1** wird mit der Abflussseite **109** zur Muffe **22** gewandt in diese eingesetzt; dabei steht der Kragen **117** mit dem eingefügten Lagerelement **13** am Sitz **221** in der Muffe **22** an. Auf der Zuflussseite **108** wird der Rückflussverhinderer **1** mit einem in die Muffe **22** einzubringenden Sicherungselement **222** in Position gehalten.

### Figur 2C

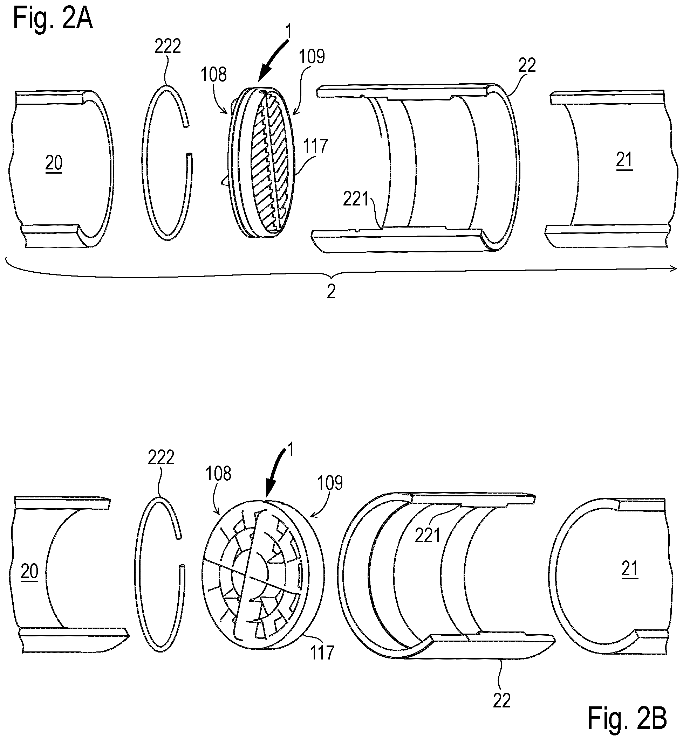

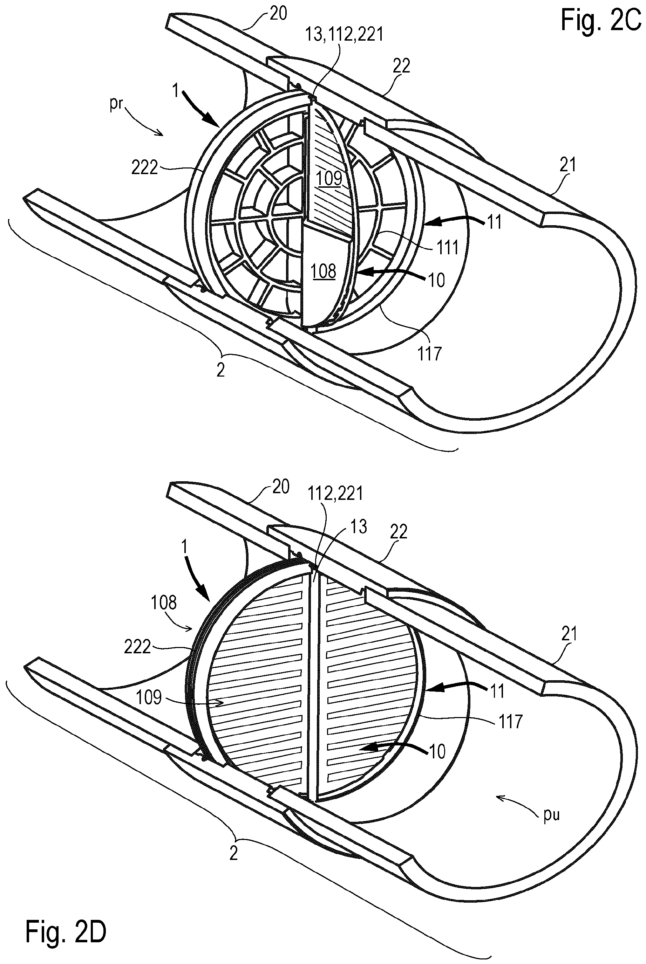

Beim Strömungsabgang **2** gemäss Figuren 2A und 2B im zusammengebauten Zustand schlagen der Kragen **117** des Widerlagers **11** und das in seiner Verankerung **112** hängende Lagerelement **13** am schulterartigen Sitz **221** in der Muffe **22** an. Einen anstehenden regulären Strömungsdruck **pᵣ** - ab grösser des definierten Betrags vorausgesetzt - bewirkt die Verstellung des Verschlusskörpers **10** aus der Schliessstellung heraus in Richtung Offenstellung.

### Figur 2D

Anstehender Strömungsdruck im Umkehrfluss **pᵤ** von der Abflussseite **109** bewirkt den Zwang des Verschlusskörpers **10** - heraus aus der Ruhe- bzw. Schliessstellung - in die intensivierte Schliessstellung.

### Figuren 3A und 3B

Den Strömungsabgang **2** nur im Aufbau modifizierend, ist hier ein solcher an einer Rohrleitung mit einer Flanschverbindung und darin eingebautem Rückflussverhinderer **1** gezeigt. Zwischen den Rohrstücken **20,21,** welche jetzt jeweils einen Flansch aufweisen, wird ein Zwischenstück **22** eingebaut. Ganz herkömmlich dienen dazu die Verschraubung **24** und die Dichtringe **23.** Das erste Rohrstück **20** erstreckt sich wiederum von der Zuflussseite und das zweite Rohrstück **20** verläuft hin zur Abflussseite.

### Figur 3C

Im zusammengebauten Zustand ist äquivalent zum vorherigen Strömungsabgang **2** der Rückflussverhinderer **1,** mit der Abflussseite **109** zum Zwischenstück **22** gewandt, in dieses eingesetzt. Der Kragen **117** des Widerlagers **11** mit dem in seiner Verankerung **112** eingefügten Lagerelement **13** steht am schulterartigen Sitz **221** im Zwischenstück **22** an. Auf der Zuflussseite **108** wird der Rückflussverhinderer **1** mittels des in das Zwischenstück **22** eingesetzten Sicherungselements **222** in Position fixiert. Ein z.B. hoher anstehender regulärer Strömungsdruck **pᵣ** hat die Verstellung des Verschlusskörpers **10** - aus der Ruhe- bzw. Schliessstellung heraus - in die maximale Offenstellung bewirkt.

### Figur 3D

Wirkt Strömungsdruck im Umkehrfluss **pᵤ** von der Abflussseite **109** auf den Verschlusskörper **10** ein, hat dies zur Folge, dass der Verschlusskörper 10 - aus der Ruhe- bzw. Schliessstellung heraus - intensiv auf die Dichtfläche **110** am Widerlager **11** aufgepresst wird und so der Rückflussverhinderer **1** den Eintrag von Medium von aussen in den Strömungsabgang **2** blockiert.

Anhand der folgenden Figurengruppe wird ein Strömungsabgang **2** in Gestalt eines Schlauchanschlusses **91** mit darin einzusetzendem Rückflussverhinderer **1** an einem Hydranten **9** behandelt. Der Begriff "Hydranten" umfasst die unterschiedlichsten Hydrantenmodelle mit Storz-Kupplungen, z.B. in Überflur- oder Unterflurbauweise sowie Wandhydranten, einschliesslich deren Ausstattung mit länderspezifischen Kupplungen, wie z.B. Schraubkupplungen.

### Figuren 4A und 4B

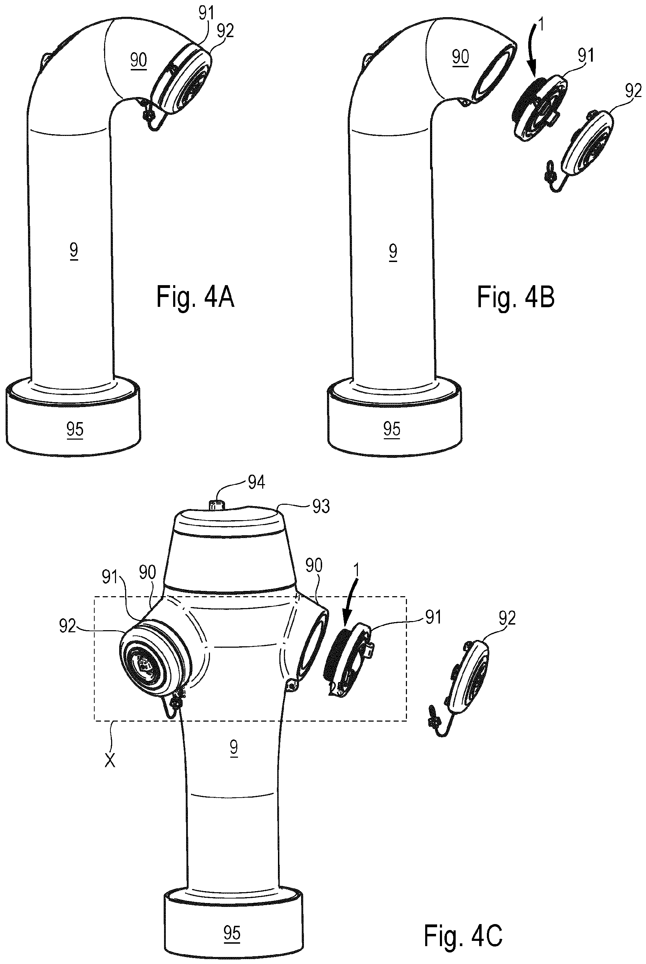

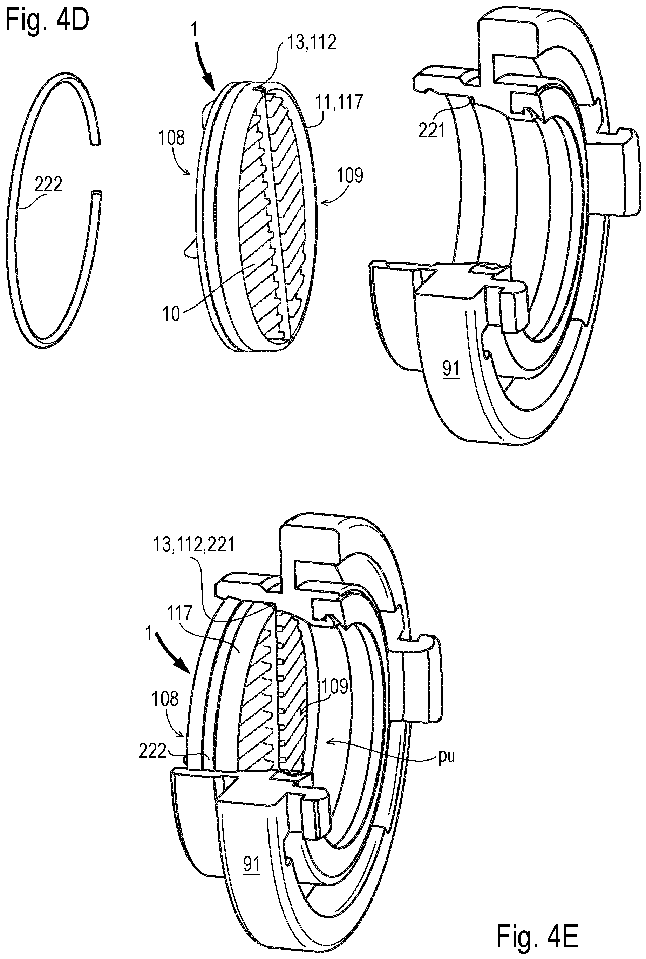

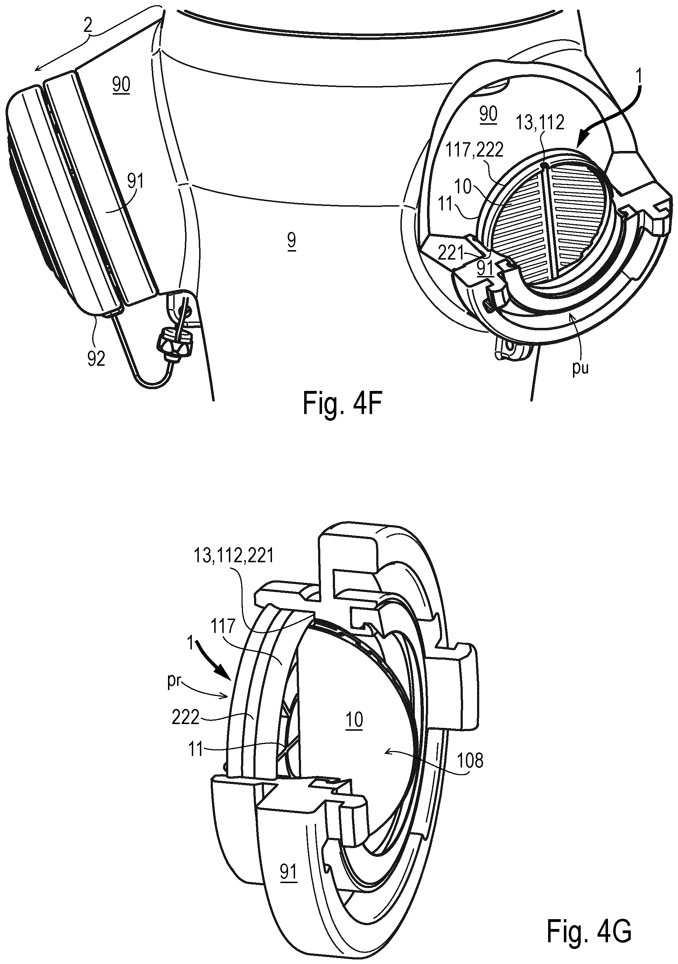

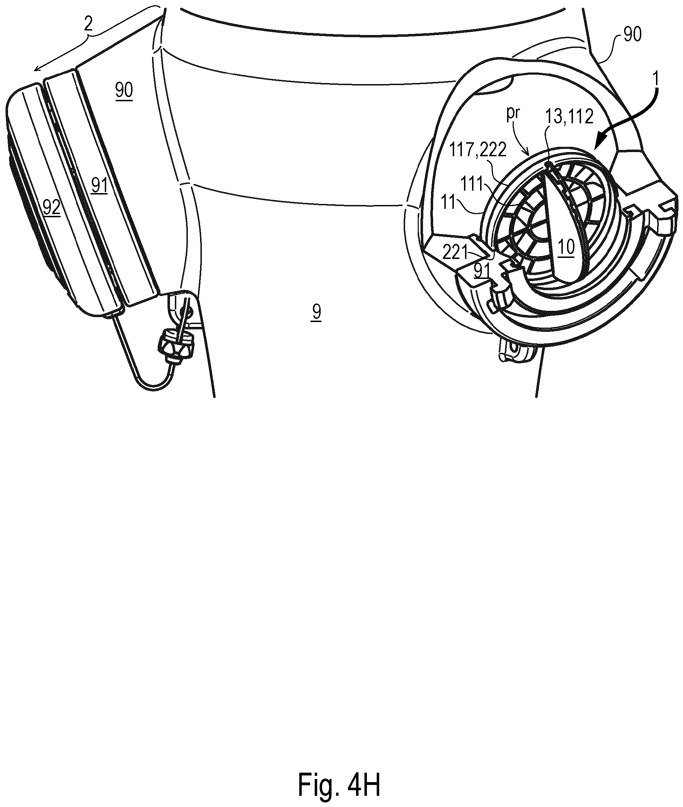

Dieses Oberteil eines Überflurhydranten **9** hat einen Stutzen **90,** daran anmontiert sind der Schlauchanschluss **91** - der im Schlauchanschluss **91** integrierte Rückflussverhinderer **1** ist verborgen - und die Verschlusskappe **92** (siehe Figur 4A). Im Zustand mit vom Stutzen **90** gelöstem Schlauchanschluss **91** und Verschlusskappe **92** ist der aus dem Schlauchanschluss **91** herausragende Rückflussverhinderer **1** sichtbar (siehe Figur 4B). Das Oberteil ist, wie üblich, um seinen Fuss mit einem Fundamentring **95** versehen.

### Figur 4C

Dieses Oberteil eines Überflurhydranten **9** besitzt zwei Stutzen **90.** Am linken Stutzen **90** ist ein Schlauchanschluss **91** montiert, wobei der darin eingesetzte Rückflussverhinderer **1** nicht sichtbar ist, und auf den Schlauchanschluss **91** ist eine herkömmliche Verschlusskappe **92** aufgesetzt. Zwecks Veranschaulichung sind vom rechten Stutzen **90** der Schlauchanschluss **91** mit dem eingesetzten Rückflussverhinderer **1** und die Verschlusskappe **92** gelöst. Das Oberteil hat um seinen Fuss einen Fundamentring **95** und auf dem Kopf einen Schutzdeckel **93,** aus dem die Spindelverlängerung **94** zur Betätigung des Hydranten **9** herausragt.

### Figuren 4D bis 4F

Bei in den Schlauchanschluss **91** eingesetztem und zusammengebautem Rückflussverhinderer **1** weist die Abflussseite **109** des Verschlusskörpers **10** ins Innere des Schlauchanschlusses **91.** Hierbei ruhen der Kragen **117** des Widerlagers **11** mit dem in seiner Verankerung **112** eingefügten Lagerelement **13** am schulterartigen Sitz **221** im Schlauchanschluss **91.** Andererseits hält das auf dem Kragen **117** des Widerlagers **11** aufgesetzte und in die Innenwandung des Schlauchanschlusses 91 eingreifende Sicherungselement **222** den Rückflussverhinderer **1** in seiner Position fixiert.

Ohne Druckeinwirkung auf den Verschlusskörper **10** verharrt dieser seiner Ruhe- bzw. Schliessstellung. Steht jedoch Strömungsdruck im Umkehrfluss **pᵤ** von der Abflussseite **109** an, wird der Verschlusskörper **10** - aus der Ruhe- bzw. Schliessstellung heraus - folglich kräftig auf die Dichtfläche **110** am Widerlager **11** gedrückt und somit sperrt der Rückflussverhinderer **1** ungewolltes Zufliessen von Medium von aussen in den Strömungsabgang **2.**

### Figuren 4G und 4H

Ein z.B. hoher anstehender regulärer Strömungsdruck **pᵣ,** der auf die Zuflussseite **108** des Verschlusskörpers **10** auftrifft - nämlich grösser ab des definierten Betrags -, lenkt den Verschlusskörper **10** aus der Ruhe- bzw. Schliessstellung heraus in eine druckabhängige Weite der Öffnung infolge eigenelastischer Faltung der Flügel des Verschlusskörpers **10** in der Biegezone **101** und um das Lagerelement **13** herum.

## Patentansprüche

1. Rückflussverhinderer (**1**) zur Installation in einen Strömungsabgang (**2**) eines Systems für fliessfähige Medien mit einem verstellbaren Verschlusskörper (**10**), bestimmt zur Öffnung bei anstehendem Strömungsdruck vonseiten des Systems als regulärer Strömungsdruck (**pᵣ**) und abgedichtetem Verschluss bei anstehendem Strömungsdruck hin zum System als Strömungsdruck im Umkehrfluss (**pᵤ**), **dadurch gekennzeichnet, dass**
a) der Verschlusskörper (**10**) zumindest eine eigenelastische Biegezone (**101**) aufweist, welche:
aa) bei anstehendem regulärem Strömungsdruck (**pᵣ**), kleiner als ein definierter Betrag das Verharren des Verschlusskörpers (**10**) in seiner Schliessstellung bewirkt;
ab) bei anstehendem regulärem Strömungsdruck (**pᵣ**), ab grösser des definierten Betrags die Verstellung des Verschlusskörpers (**10**) aus der Schliessstellung heraus in Richtung Offenstellung bewirkt;
ac) bei Reduktion des anstehenden regulären Strömungsdruck (**pᵣ**), kleiner als der definierte Betrag die Einstellung des Verschlusskörpers (**10**) zurück in die Schliessstellung aufgrund materialbedingter Rückverformung bewirkt; und
ad) bei anstehendem Strömungsdruck im Umkehrfluss (**pᵤ**) sich die Schliessstellung des Verschlusskörpers (**10**) intensiviert;
b) im Strömungsabgang (**2**) ein Lagerelement (**13**) zum Halten des Verschlusskörpers (**10**) vorgesehen ist; und
c) ein den Durchfluss des Mediums erlaubendes Widerlager (**11**) aufseiten des Systems angeordnet ist, auf dem sich der Verschlusskörper (**10**) in der Schliessstellung abstützt.

2. Rückflussverhinderer (**1**) nach Anspruch 1, **dadurch gekennzeichnet, dass** die zumindest eine Biegezone (**101**) sich bahnförmig über den Durchmesser des Verschlusskörpers (**10**) erstreckt und den Verschlusskörper (**10**) so in zwei Zonen, vorzugsweise halbkreisförmige Zonen gliedert.

3. Rückflussverhinderer (**1**) nach zumindest einem der Ansprüche 1 und 2, **dadurch gekennzeichnet, dass** das Lagerelement (**13**) als Stangenteil beschaffen ist, vorzugsweise als achsartiger Stab, welches sich auf der Abflussseite (**109**) entlang der zumindest einen Biegezone (**101**) erstreckt und in einer Verankerung (**112**) positionsgesichert ist.

4. Rückflussverhinderer (**1**) nach Anspruch 3, **dadurch gekennzeichnet, dass** die Verankerung (**112**):
a) gänzlich im Widerlager (**11**) angeordnet ist; oder
b) einerseits im Widerlager (**11**) und andererseits in einem Sitz (**221**) in einem Zwischenstück (**22**), z.B. einer Muffe (**22**), des Strömungsabgangs (**2**) oder in einem Schlauchanschluss (**91**) eines Hydranten (**9**) vorgesehen ist.

5. Rückflussverhinderer (**1**) nach zumindest einem der Ansprüche 1 bis 4, **dadurch gekennzeichnet, dass** der Verschlusskörper (**10**):
a) auf der Zuflussseite (**108**) eine Positionierkontur (**103**) besitzt, die sich vorzugsweise über den Durchmesser des Verschlusskörpers (**10**) parallel zu der zumindest einen Biegezone (**101**) erstreckt und zur formschlüssigen Einbettung in der Aufnahmekontur (**113**) am Widerlager (**11**) bestimmt ist; und
b) auf der Abflussseite (**109**) Versteifungskonturen (**102)** hat, die sich bis an die zumindest eine Biegezone (**101**) heran erstrecken.

6. Rückflussverhinderer (**1**) nach Anspruch 1, **dadurch gekennzeichnet, dass**
a) der Verschlusskörper (1**0)** in eine Vielzahl von Zonen gegliedert ist, zwischen denen Biegezonen (**101**) verlaufen; und
b) das Lagerelement (**13**) als Gestänge beschaffen ist, welches sich auf der Abflussseite (**109**) erstreckt und in einer Verankerung (**112**) positionsgesichert ist.

7. Rückflussverhinderer (**1**) nach Anspruch 6, **dadurch gekennzeichnet, dass** die Verankerung (**112**):
a) gänzlich im Widerlager (**11**) angeordnet ist; oder
b) einerseits im Widerlager (**11**) und andererseits in einem Sitz (**221**) in einem Zwischenstück (**22)**, z.B. einer Muffe (**22**), des Strömungsabgangs (**2**) oder in einem Schlauchanschluss (**91**) eines Hydranten (**9**) vorgesehen ist.

8. Rückflussverhinderer (**1**) nach zumindest einem der Ansprüche 6 und 7, **dadurch gekennzeichnet, dass** der Verschlusskörper (**10**):
a) auf der Zuflussseite (**108**) zumindest eine Positionierkontur (**103**) besitzt, die zur formschlüssigen Einbettung in zumindest einer Aufnahmekontur (**113**) am Widerlager **(11)** bestimmt ist; und
b) auf der Abflussseite **(109)** Versteifungskonturen **(102)** hat, die sich bis an die Biegezonen **(101)** heran erstrecken.

9. Rückflussverhinderer **(1)** nach zumindest einem der Ansprüche 1 bis 8, **dadurch gekennzeichnet, dass** der Verschlusskörper **(10)** aus Kunststoff beschaffen ist.

10. Rückflussverhinderer **(1)** zumindest einem der Ansprüche 1 bis 9, **dadurch gekennzeichnet, dass** der Verschlusskörper **(10)** sich in seiner Ruhestellung, wie in seiner Schliessstellung, als scheibenförmig ausgebildet zeigt und eine dem System zugewandte Zuflussseite **(108)** sowie eine dazu abgewandte Abflussseite **(109)** hat.

11. Rückflussverhinderer **(1)** nach zumindest einem der Ansprüche 1 bis 10, **dadurch gekennzeichnet, dass**
a) das Widerlager **(11)** einteilig ausgebildet ist und eine Dichtfläche **(110)** hat, die im Zusammenwirken mit dem Verschlusskörper **(10)** bei anstehendem Strömungsdruck aufgrund Umkehrfluss **(pᵤ),** die intensivierte Abdichtung bewirkt; und
b) sich zwischen der Dichtfläche **(110)** eine gitterartige Verstrebung **(111)** erstreckt, welche bei anstehendem regulärem Strömungsdruck **(pᵣ),** den Durchfluss durch den Rückflussverhinderer **(1)** erlaubt, aber bei anstehendem Strömungsdruck aufgrund Umkehrfluss den Verschlusskörper **(10)** flächig stützt.

12. Rückflussverhinderer **(1)** nach zumindest einem der Ansprüche 1 bis 11, **dadurch gekennzeichnet, dass** dieser bestimmt ist:
a) zur Verwendung in Systemen, nämlich Anlagen, Rohrleitungsnetzen und Hydranten **(9);** und
b) für die Medien, nämlich Gase, Flüssigkeiten, mit Gasstrom geförderte staub- oder feinkörnige Schüttgüter und Dickstoffe.
